# EUROPEAN PATENT APPLICATION

(11) **EP 4 456 037 A1**
(43) Date of publication of application: **30.10.2024**
(21) Application number: 22830943.1
(22) Date of filing: 30.11.2022
(51) Int. Cl.: G08G 1/16, B60N 2/00, B60W 40/08, G06V 20/59, B60W 40/13, B60R 1/00, B60K 31/00, B60W 30/08, B60W 30/14

(54) **SADDLED VEHICLE CONTROL DEVICE AND CONTROL METHOD**

(30) Priority: 23.12.2021 JP 2021209389
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2022/061589
(87) International publication number: WO 2023/119025

(57) **Abstract**

The present invention obtains a controller and a control method capable of appropriately assisting with a rider.

An acquisition section of a controller (20) for a straddle-type vehicle (100) acquires riding object information as information on a riding object as an object that is other than a rider (200) of the straddle-type vehicle (100) and rides on the straddle-type vehicle (100) on the basis of output of an environment information detection system (11) that includes at least one environment sensor (11a, 11b, 11c, 11d) that is mounted to the straddle-type vehicle (100), and detects information on a surrounding object as an object located around the straddle-type vehicle (100), and an execution section of the controller (20) executes assistance operation for the rider (200) of the straddle-type vehicle (100) on the basis of the riding object information.

## Description

### Technical Field

The present invention relates to a controller for a straddle-type vehicle and a control method for a straddle-type vehicle.

### Background Art

As a conventional controller for a straddle-type vehicle, a controller that executes assistance operation for a rider has been known (for example, PTL 1).

### Citation List

### Patent Literature

PTL 1: JP2009-116882A

### Summary of Invention

### Technical Problem

Compared to other vehicles (for example, a passenger car, a truck, and the like), travel of a straddle-type vehicle is strongly affected by an object that is other than the rider and rides on the straddle-type vehicle. However, the conventional controller for the straddle-type vehicle cannot acquire information on the object that is other than the rider and rides on the straddle-type vehicle, and thus may be difficult to execute the appropriate assistance operation.

The present invention has been made with the above-described problem as the background and therefore obtains a controller capable of appropriately assisting with a rider. The present invention also obtains a control method capable of appropriately assisting with the rider.

### Solution to Problem

A controller according to the present invention is a controller for a straddle-type vehicle and includes: an acquisition section that acquires riding object information as information on a riding object, which is other than a rider of the straddle-type vehicle and rides on the straddle-type vehicle, on the basis of output of an environment information detection system that includes at least one environment sensor mounted to the straddle-type vehicle and detects information on a surrounding object as an object located around the straddle-type vehicle; and an execution section that executes rider assistance operation on the basis of the riding object information.

A control method according to the present invention is a control method for a straddle-type vehicle and includes: acquiring riding object information as information on a riding object, which is other than a rider of the straddle-type vehicle and rides on the straddle-type vehicle, by an acquisition section of a controller for the straddle-type vehicle on the basis of output of an environment information detection system including at least one environment sensor mounted to the straddle-type vehicle and detecting information on a surrounding object as an object located around the straddle-type vehicle; and executing rider assistance operation by an execution section of the controller on the basis of the riding object information.

### Advantageous Effects of Invention

In the controller and the control method according to the present invention, the information on the object, which is other than the rider and rides on the straddle-type vehicle, is acquired on the basis of the output of the environment information detection system, and the assistance operation for the rider of the straddle-type vehicle is executed on the basis of such information. Accordingly, it is possible to appropriately acquire the information on the object, which is other than the rider and rides on the straddle-type vehicle. Therefore, it is possible to appropriately assist with the rider.

### Brief Description of Drawings

Fig. 1 is a view illustrating a mounted state of an assistance system according to an embodiment of the present invention to a straddle-type vehicle.
Fig. 2 is a diagram illustrating a configuration of the assistance system according to the embodiment of the present invention.
Fig. 3 is a chart illustrating an example of an operation flow of a controller in the assistance system according to the embodiment of the present invention. Description of Embodiments

A description will hereinafter be made on a controller and a control method according to the present invention with reference to the drawings.

A configuration, operation, and the like, which will be described below, merely constitute one example, and the controller and the control method according to the present invention are not limited to a case with such a configuration, such operation, and the like.

For example, a description will hereinafter be made on a case where the controller and the control method according to the present invention are applied to a two-wheeled motorcycle. However, the controller and the control method according to the present invention may be applied to a straddle-type vehicle other than the two-wheeled motorcycle. A straddle-type vehicle means a vehicle in general that a rider straddles a body and drives the straddle-type vehicle in a seated state. Examples of the straddle-type vehicle are the two-wheeled motorcycle, a three-wheeled motorcycle, a pedal-driven vehicle, and an all-terrain vehicle. The motorcycles include a vehicle that has an engine as a propelling source, a vehicle that has an electric motor as the propelling source, and the like. Examples of the motorcycle are a bike, a scooter, and an electric scooter. The pedal-driven vehicle means a vehicle in general that can travel forward on a road by a depression force applied to pedals by the rider. Examples of the pedal-driven vehicle are a normal pedal-driven vehicle, an electrically-assisted pedal-driven vehicle, and an electric pedal-driven vehicle.

The same or similar description will appropriately be simplified or will not be made below. In the drawings, the same or similar portions will be denoted by the same reference sign or will not be denoted by a reference sign. A detailed structure will appropriately be illustrated in a simplified manner or will not be illustrated.

### Embodiment

A description will hereinafter be made on an assistance system according to an embodiment.

### <Configuration of Assistance System>

A description will be made on a configuration of the assistance system according to the embodiment.

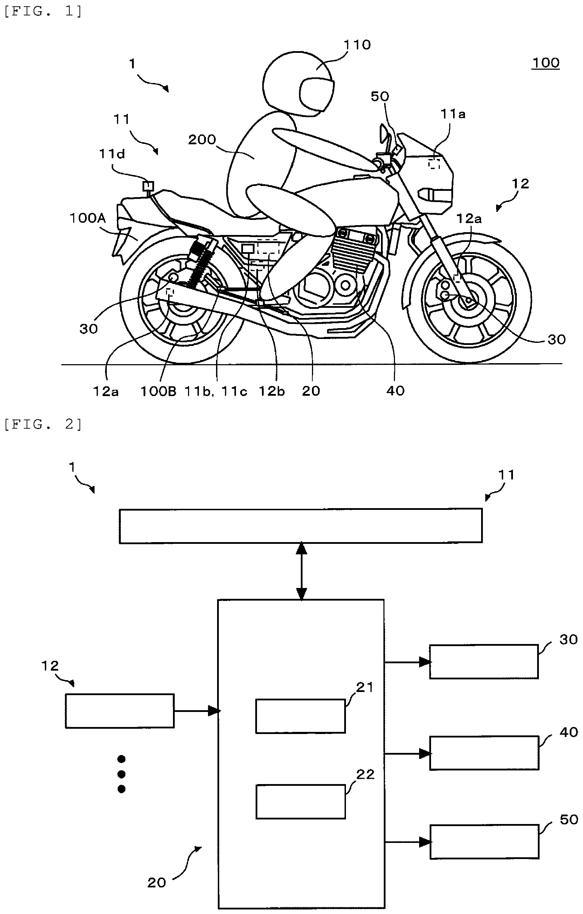

Fig. 1 is a view illustrating a mounted state of the assistance system according to the embodiment of the present invention to the straddle-type vehicle. Fig. 2 is a diagram illustrating the configuration of the assistance system according to the embodiment of the present invention.

As illustrated in Fig. 1 and Fig. 2, an assistance system 1 is mounted to a straddle-type vehicle 100. The assistance system 1 at least includes: an environment information detection system 11 for detecting environment information of the straddle-type vehicle 100; a travel state information detection system 12 for detecting travel state information of the straddle-type vehicle 100; and a controller (ECU) 20. The assistance system 1 assists with a rider 200 of the straddle-type vehicle 100. The controller 20 receives detection results by various systems (not illustrated) for detecting other types of information (for example, information on a brake operation by the rider 200, information on an accelerator operation by the rider 200, and the like) when necessary. Each section of the assistance system 1 may exclusively be used for the assistance system 1 or may be shared with any of the other systems.

For example, the environment information detection system 11 includes: at least one environment sensor 11a facing a front side of the straddle-type vehicle 100; at least one environment sensor 11b facing a right side of the straddle-type vehicle 100; at least one environment sensor 11c facing a left side of the straddle-type vehicle 100; and at least one environment sensor 11d facing a rear side of the straddle-type vehicle 100. In Fig. 1, the environmental sensor 11c is illustrated in a manner to be located on a near side of the sheet. However, in reality, the environmental sensor 11c is located on a far side of the sheet. The environment sensors 11a, 11b, 11c, 11d are mounted to the straddle-type vehicle 100. For example, each of the environment sensors 11a, 11b, 11c, 11d is an ultrasonic sensor, a radar, a Lidar sensor, a camera, or the like. Each of the environment sensors 11a, 11b, 11c, 11d may detect information on a distance to and/or a direction (for example, information on a relative position, a relative distance, a relative speed, relative acceleration, a relative jerk, a passing time difference, a predicted time until a collision, or the like) of an object (for example, a vehicle, an obstacle, a road facility, a person, an animal, or the like) located within a detection range in a non-contact manner. Alternatively, each of the environment sensors 11a, 11b, 11c, 11d may detect a characteristic of the object (for example, a type of the object, a shape of the object, a mark on the object, or the like) located within the detection range in the non-contact manner. That is, the environment information detection system 11 detects the information on a surrounding object that is the object located around the straddle-type vehicle 100 as the environment information by using the environment sensors 11a, 11b, 11c, 11d. At least one environment sensor of the environment sensors 11a, 11b, 11c, 11d may serve as another environment sensor. When necessary, at least one of the environment sensors 11a, 11b, 11c, 11d may not be provided, or another sensor may be added.

For example, the travel state information detection system 12 includes a wheel rotational frequency sensor 12a and an inertial sensor (IMU) 12b. The wheel rotational frequency sensor 12a detects a rotational frequency of a wheel of the straddle-type vehicle 100. The wheel rotational frequency sensor 12a may detect another physical quantity that can substantially be converted to the rotational frequency of the wheel of the straddle-type vehicle 100. The inertia sensor 12b detects three-axis acceleration and three-axis (roll, pitch, and yaw) angular velocities generated to the straddle-type vehicle 100. The inertial sensor 12b may detect other physical quantities that can substantially be converted to the three-axis acceleration and the three-axis angular velocities generated to the straddle-type vehicle 100. Alternatively, the inertial sensor 12b may partially detect the three-axis acceleration and the three-axis angular velocities. Further alternatively, when necessary, at least one of the wheel rotational frequency sensor 12a and the inertial sensor 12b may not be provided, or another sensor may be added.

The controller 20 at least includes an acquisition section 21 and an execution section 22. The sections of the controller 20 may collectively be provided in a single casing or may separately be provided in plural casings. In addition, the controller 20 may partially or entirely be constructed of a microcomputer, a microprocessor unit, or the like, may be constructed of one whose firmware and the like can be updated, or may be a program module or the like that is executed by a command from a CPU or the like, for example.

The acquisition section 21 acquires riding object information on the basis of output of the environment information detection system 11. The riding object information is information on a riding object as the object that is other than the rider 200 and rides on the straddle-type vehicle 100. For example, the riding object is luggage that is loaded on a rear portion of the straddle-type vehicle 100, a passenger who is seated on a rear seat of the straddle-type vehicle 100, or the like. In addition, the acquisition section 21 acquires the travel state information of the straddle-type vehicle 100 on the basis of output of the travel state information detection system 12.

For example, in the case where the environment sensor 11d, that is, the environment sensor, which is assumed to face a position where the luggage is present (for example, an upper side of a rear fender 100A, or the like) when the luggage in a standard size ride at a standard position in the straddle-type vehicle 100, cannot detect a close range, the acquisition section 21 determines whether all or a part of a field of view of the environment sensor 11d cannot be detected on the basis of the output of the environment information detection system 11. That is, the acquisition section 21 acquires information on detectability by the environment sensor 11d. In the case where the determination remains positive beyond a reference time or a reference travel distance, the acquisition section 21 determines that the luggage is present. That is, the riding object information includes information on presence or absence of the riding object. In addition, in the case where the determination remains positive beyond the reference time or the reference travel distance, the acquisition section 21 estimates a riding position of the luggage by using information on a relative position of the field of view of the environment sensor 11d to the straddle-type vehicle 100. For example, in the case where the field of view of the environment sensor 11d cannot partially be detected or only some of the plural environment sensors 11d are in an undetectable state, the acquisition section 21 estimates the riding position of the luggage by using information on a relative position of an undetectable area to the straddle-type vehicle 100. That is, the riding object information includes information on the position of the riding object. Furthermore, in the case where the determination remains positive beyond the reference time or the reference travel distance, the acquisition section 21 estimates that a type of the riding object is the luggage by using the information on the relative position of the field of view of the environment sensor 11d to the straddle-type vehicle 100. For example, in the case where the environmental sensor 11d is not detectable while the environmental sensor 11b and the environmental sensor 11c are detectable, the acquisition section 21 estimates that the type of the riding object is not the passenger but the luggage. That is, the riding object information includes information on the type of the riding object. Moreover, in the case where the determination remains positive beyond the reference time or the reference travel distance, the acquisition section 21 estimates a size of the riding luggage by using the information on the relative position of the field of view of the environment sensor 11d to the straddle-type vehicle 100. For example, in the case where the field of view of the environment sensor 11d cannot partially be detected or only some of the plural environment sensors 11d are in the undetectable state, the acquisition section 21 estimates the size of the riding luggage by using the information on the relative position of the undetectable area to the straddle-type vehicle 100. That is, the riding object information includes information on the size of the riding object. In addition, in the case where the determination remains positive beyond the reference time or the reference travel distance, the acquisition section 21 estimates weight of the luggage by using information on a position of ground that is detected by the environment sensor 11b, the environment sensor 11c, and/or the environment sensor 11d. For example, the acquisition section 21 estimates the weight of the luggage by deriving a change amount with respect to the position of the ground in an absent state of the riding object, which is set or acquired in advance. That is, the riding object information includes information on the weight of the riding object. The information on the position of the ground is preferably acquired when the straddle-type vehicle 100 is stopped.

For example, in the case where the environment sensor 11d, that is, the environment sensor, which is assumed to face the position where the luggage is present (for example, the upper side of the rear fender 100A, or the like) when the luggage in the standard size rides at the standard position in the straddle-type vehicle 100, can detect the close range, the acquisition section 21 determines whether a certain object, that is, the luggage exists at a position, a distance of which from the environment sensor 11d falls below a reference distance, and/or a position, a direction of which from the environment sensor 11d falls within a reference range, on the basis of the output of the environment information detection system 11. That is, the acquisition section 21 acquires information on the distance and/or the direction from the environment sensor 11d to the riding object. In the case where the determination remains positive beyond the reference time or the reference travel distance, the acquisition section 21 determines that the luggage is present. That is, the riding object information includes the information on the presence or the absence of the riding object. In addition, in the case where the determination remains positive beyond the reference time or the reference travel distance, the acquisition section 21 estimates the riding position and/or the size of the luggage by using the information on the distance and/or the direction from the environment sensor 11d to the object, that is, the luggage. That is, the riding object information includes the information on the position and/or the size of the riding object. Furthermore, in the case where the determination remains positive beyond the reference time or the reference travel distance, the acquisition section 21 estimates that the type of the riding object is the luggage by using the information on a characteristic of the riding object detected by the environment sensor 11d and/or the information on the relative position of the field of view of the environment sensor 11d to the straddle-type vehicle 100. For example, in the case where it is determined positive only by the environment sensor 11d, the acquisition section 21 estimates that the type of the riding object is not the passenger but the luggage. That is, the riding object information includes the information on the type of the riding object. Moreover, in the case where the determination remains positive beyond the reference time or the reference travel distance, the acquisition section 21 estimates the weight of the luggage by using the information on the position of the ground that is detected by the environment sensor 11b, the environment sensor 11c, and/or the environment sensor 11d. For example, the acquisition section 21 estimates the weight of the luggage by deriving the change amount with respect to the position of the ground in the absent state of the riding object, which is set or acquired in advance. That is, the riding object information includes the information on the weight of the riding object. The information on the position of the ground is preferably acquired when the straddle-type vehicle 100 is stopped.

For example, in the case where the environment sensor 11b and/or the environment sensor 11c, that is, the environment sensor, which is assumed to face a position where the passenger's leg is present (for example, an upper side of a passenger step 100B, or the like) when the passenger rides at the standard position in the straddle-type vehicle 100, cannot detect the close range, the acquisition section 21 determines whether all or the part of the field of view of the environment sensor 11b and/or the environment sensor 11c cannot be detected on the basis of the output of the environment information detection system 11. That is, the acquisition section 21 acquires the information on the detectability of the environment sensor 11b and/or the environment sensor 11c. In the case where the determination remains positive beyond the reference time or the reference travel distance, the acquisition section 21 determines that the passenger rides on the straddle-type vehicle 100. That is, the riding object information includes the information on the presence or the absence of the riding object. In addition, in the case where the determination remains positive beyond the reference time or the reference travel distance, the acquisition section 21 estimates the riding position of the passenger by using the information on the relative position of the field of view of the environment sensor 11b and/or the environment sensor 11c to the straddle-type vehicle 100. For example, in the case where the field of view of the environment sensor 11b cannot partially be detected or only some of the plural environment sensors 11b are in the undetectable state, the acquisition section 21 estimates the riding position of the passenger by using the information on the relative position of the undetectable area to the straddle-type vehicle 100. That is, the riding object information includes the information on the position of the riding object. Furthermore, in the case where the determination remains positive beyond the reference time or the reference travel distance, the acquisition section 21 estimates that the type of the riding object is the passenger by using the information on the relative position of the field of view of the environment sensor 11d to the straddle-type vehicle 100. For example, in the case where the environmental sensor 11b and the environment sensor 11c are not dectable, the acquisition section 21 estimates that the type of the riding object is not the luggage but the passenger. That is, the riding object information includes the information on the type of the riding object. Moreover, in the case where the determination remains positive beyond the reference time or the reference travel distance, the acquisition section 21 estimates weight of the passenger by using the information on the position of the ground that is detected by the environment sensor 11d, the environment sensor 11b, and/or the environment sensor 11c. For example, the acquisition section 21 estimates the weight of the passenger by deriving the change amount with respect to the position of the ground in the absent state of the riding object, which is set or acquired in advance. That is, the riding object information includes the information on the weight of the riding object. The information on the position of the ground is preferably acquired when the straddle-type vehicle 100 is stopped.

For example, in the case where the environment sensor 11b and/or the environment sensor 11c, that is, the environment sensor, which is assumed to face the position where the passenger's leg is present (for example, the upper side of the passenger step 100B, or the like) when the passenger rides at the standard position in the straddle-type vehicle 100, can detect the close range, the acquisition section 21 determines whether the certain object, that is, the passenger's leg exists at a position, a distance of which from the environment sensor 11b and/or the environment sensor 11c falls below a reference distance, and/or a position, a direction of which from the environment sensor 11b and/or the environment sensor 11c falls within a reference range, on the basis of the output of the environment information detection system 11. That is, the acquisition section 21 acquires information on the distance and/or the direction from the environment sensor 11b and/or the environment sensor 11c to the riding object. In the case where the determination remains positive beyond the reference time or the reference travel distance, the acquisition section 21 determines that the passenger rides on the straddle-type vehicle 100. That is, the riding object information includes the information on the presence or the absence of the riding object. In addition, in the case where the determination remains positive beyond the reference time or the reference travel distance, the acquisition section 21 estimates the riding position of the passenger by using the information on the distance and/or the direction from the environment sensor 11b and/or the environment sensor 11c to the object, that is, the passenger's leg. That is, the riding object information includes the information on the position of the riding object. Furthermore, in the case where the determination remains positive beyond the reference time or the reference travel distance, the acquisition section 21 estimates that the type of the riding object is the passenger by using the information on the characteristic of the riding object detected by the environment sensor 11b and/or the environment sensor 11c and/or the information on the relative position of the field of view of the environment sensor 11b and/or the environment sensor 11c to the straddle-type vehicle 100. For example, in the case where it is determined positive only by the environment sensor 11b and/or the environment sensor 11c, the acquisition section 21 estimates that the type of the riding object is not the luggage but the passenger. That is, the riding object information includes the information on the type of the riding object. Moreover, in the case where the determination remains positive beyond the reference time or the reference travel distance, the acquisition section 21 estimates the weight of the passenger by using the information on the position of the ground that is detected by the environment sensor 11d, the environment sensor 11b, and/or the environment sensor 11c. For example, the acquisition section 21 estimates the weight of the passenger by deriving the change amount with respect to the position of the ground in the absent state of the riding object, which is set or acquired in advance. That is, the riding object information includes the information on the weight of the riding object. The information on the position of the ground is preferably acquired when the straddle-type vehicle 100 is stopped.

At least one of the environment sensor 11b, the environment sensor 11c, and the environment sensor 11d may exclusively be used to acquire the riding object information, or may also be used to determine a collision possibility of the surrounding object, which is located on a lateral side or the rear side of the straddle-type vehicle 100, against the straddle-type vehicle 100 in collision suppression operation, which will be described below. Alternatively, in the case where the environment sensor 11a or the environment sensor 11d has the wide field of view, at least one of the environment sensor 11b and the environment sensor 11c may be substituted by the environment sensor 11a or the environment sensor 11d. Further alternatively, in the case where the environment sensor 11b or the environment sensor 11c has the wide field of view, at least one of the environment sensor 11a and the environment sensor 11d may be substituted by the environment sensor 11b or the environment sensor 11c. In particular, the environment sensor for acquiring the riding object information may be the ultrasonic sensor. In such a case, the ultrasonic sensor may detect distance information and/or quality characteristic information (for example, an amplitude, a correlation coefficient, a frequency, or the like) included in a reflected wave in order to acquire the riding object information, may detect a noise level, or may detect ground clutter.

The execution section 22 executes assistance operation for the rider 200 on the basis of the riding object information that is acquired by the acquisition section 21. For example, the execution section 22 executes the assistance operation for the rider 200 by outputting control commands to a brake system 30 that generates a braking force to the straddle-type vehicle 100, a drive system 40 that generates drive power to the straddle-type vehicle 100, a notification device 50 that issues notification to the rider 200 (for example, notification that acts on an auditory organ, notification that acts on a visual organ, notification that acts on a sensory organ, or the like), and the like. That is, as the assistance operation for the rider 200, the execution section 22 may execute behavior control operation for the straddle-type vehicle 100 or may execute notification operation to the rider 200. The notification device 50 may be provided to the straddle-type vehicle 100 or may be provided to a worn article 110 (for example, a helmet, goggles, gloves, or the like) by the rider 200. Such a worn article 110 is communicatively connected to the straddle-type vehicle 100. In addition, the notification to the rider 200 may be issued by haptic motion that causes an instantaneous reduction or increase in the acceleration/deceleration of the straddle-type vehicle 100. In such a case, the brake system 30 or the drive system 40 implements the function of the notification device 50.

As a specific example, the execution section 22 executes, as the notification operation, operation to notify the rider 200 that the riding object rides on the straddle-type vehicle 100. In addition, the execution section 22 executes, as the notification operation, operation to notify the rider 200 of the riding position of the riding object. Furthermore, the execution section 22 executes, as the notification operation, operation to notify the rider 200 of the type of the riding object. Moreover, the execution section 22 executes, as the notification operation, operation to notify the rider 200 of the size of the riding object. The execution section 22 executes, as the notification operation, operation to notify the rider 200 of the weight of the riding object.

As another specific example, the execution section 22 executes, as the behavior control operation, operation to change a mode of slip control (for example, anti-lock brake control, traction control, sideslip suppression control, or the like) and/or suspension control for the straddle-type vehicle 100 according to the presence or the absence of the riding object. In the case where the riding object information is information indicating that the riding object rides on the straddle-type vehicle 100, the execution section 22 assumes that the straddle-type vehicle 100 is loaded at the rear, and automatically sets a mode in which a threshold value specific to such a state is set. The execution section 22 preferably reflects the standard weight, which is assumed from the type and/or the size of the riding object, to the setting of the mode. In addition, the execution section 22 preferably reflects the information on the riding position of the riding object to the setting of the mode. Furthermore, the execution section 22 preferably reflects the information on the weight of the riding object to the setting of the mode. Here, the execution section 22 may execute, as the notification operation, operation to suggest to the rider 200 to change the mode, and may confirm the mode change after the rider 200 approves the mode change.

As another specific example, the execution section 22 executes the assistance operation for the rider 200 on the basis of, in addition to the riding object information, positional relationship information between the straddle-type vehicle 100 and the surrounding object as the object (for example, the vehicle, the obstacle, the road facility, the person, the animal, or the like) that is located around the straddle-type vehicle 100. The acquisition section 21 acquires the positional relationship information on the basis of the output of the environment information detection system 11. For example, the positional relationship information is information on the relative position, the relative distance, the relative speed, the relative acceleration, the relative jerk, the passing time difference, the predicted time until the collision, or the like. The positional relationship information may be information on another physical quantity that can substantially be converted to respective one of those. In order to acquire the positional relationship information, a different environment sensor from the environment sensor used to acquire the riding object information may be used, or the environment sensor used to acquire the riding object information may be used.

For example, the execution section 22 executes, as the assistance operation for the rider 200, automatic acceleration/deceleration operation of the straddle-type vehicle 100 on the basis of the positional relationship information that is acquired by the acquisition section 21. For example, the automatic acceleration/deceleration operation is speed following control (so-called adaptive cruise control) for a preceding vehicle, which is executed in a state where the brake operation or the accelerator operation is not performed by the rider 200, the speed following control for the preceding vehicle, which is executed in a state where the brake operation or the accelerator operation is performed by the rider 200, or the like. The acquisition section 21 acquires the information on the relative distance, the relative speed, or the passing time difference between the straddle-type vehicle 100 and the preceding vehicle of the straddle-type vehicle 100, that is, the object as a speed following target. The execution section 22 outputs the control command to the brake system 30 or the drive system 40, causes generation of the acceleration/deceleration to the straddle-type vehicle 100 according to the information on the relative distance, the relative speed, or the passing time difference, and thereby causes the straddle-type vehicle 100 to follow the preceding vehicle at the same speed. The brake system 30 may be controlled to generate or increase the deceleration or may be controlled to generate or increase the acceleration. The drive system 40 may be controlled to generate or increase the acceleration or may be controlled to generate or increase the deceleration. When executing the automatic acceleration/deceleration operation, the execution section 22 outputs a control signal to the notification device 50 and issues the notification to the rider 200 when necessary.

For example, the execution section 22 executes, as the assistance operation for the rider 200, the collision suppression operation of the straddle-type vehicle 100 on the basis of the positional relationship information that is acquired by the acquisition section 21. The acquisition section 21 acquires the information on the predicted time until the collision, that is, the information on the collision possibility between the straddle-type vehicle 100 and the surrounding object as the object (for example, the vehicle, the obstacle, the road facility, the person, the animal, or the like) that is located around (for example, in front of, on a right side, on a left side, behind, or the like of) the straddle-type vehicle 100. In the case where it is determined that the collision possibility exceeds a reference, the execution section 22 outputs the control signal to the notification device 50 and causes the notification device 50 to issue the notification to the rider 200. In addition, in the case where it is determined that the collision possibility exceeds the reference, the execution section 22 outputs the control command to the brake system 30 or the drive system 40 and causes the brake system 30 or the drive system 40 to generate the acceleration/deceleration to the straddle-type vehicle 100, so as to prevent the collision. The brake system 30 may be controlled to generate or increase the deceleration or may be controlled to generate or increase the acceleration. The drive system 40 may be controlled to generate or increase the acceleration or may be controlled to generate or increase the deceleration.

For example, in the automatic acceleration/deceleration operation and/or the collision suppression operation, the execution section 22 changes an upper limit value of the acceleration and/or an upper limit value of the deceleration generated to the straddle-type vehicle 100 according to the presence or the absence, the position, the type, the size, and/or the weight of the riding object. In addition, in the collision suppression operation, the execution section 22 changes a criterion for the determination of the collision possibility according to the presence or the absence, the position, the type, the size, and/or the weight of the riding object. The execution section 22 may output the control command to the environment information detection system 11 and change the direction of the field of view of the environment sensor (for example, the environment sensor 11b, the environment sensor 11c, the environment sensor 11d, or the like) having the riding object in the field of view, so as to exclude the riding object from the field of view. The execution section 22 may output a command to the acquisition section 21 and omit calculation processing for acquiring the positional relationship information between the straddle-type vehicle 100 and the surrounding object in an undetectable area by the riding object or the area where the riding object is detected among data that is output from the environment information detection system 11. That is, the acquisition section 21 may acquire the positional relationship information with the surrounding object located in the area that is set according to the riding object information of the area around the straddle-type vehicle 100.

### <Operation of Assistance System>

A description will be made on operation of the assistance system according to the embodiment.

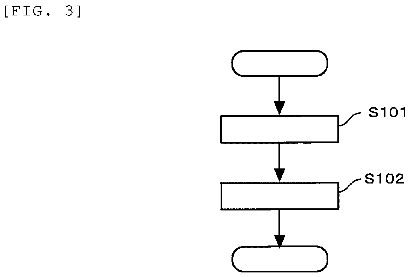

Fig. 3 is a chart illustrating an example of an operation flow of the controller in the assistance system according to the embodiment of the present invention.

The controller 20 executes the operation flow illustrated in Fig. 3 during the travel of the straddle-type vehicle 100.

### (Acquisition Step)

In step S101, the acquisition section 21 acquires the riding object information on the basis of the output of the environment information detection system 11. The acquisition section 21 acquires the positional relationship information between the straddle-type vehicle 100 and the surrounding object on the basis of the output of the environment information detection system 11 when necessary. In addition, the acquisition section 21 acquires the travel state information of the straddle-type vehicle 100 on the basis of the output of the travel state information detection system 12 when necessary.

### (Execution Step)

Next, in step S102, the execution section 22 executes the assistance operation for the rider 200 at least on the basis of the riding object information that is acquired by the acquisition section 21.

### <Effects of Assistance System>

A description will be made on effects of the assistance system according to the embodiment.

In the controller 20, the riding object information is acquired on the basis of the output of the environment information detection system 11, and the assistance operation for the rider 200 of the straddle-type vehicle 100 is executed on the basis of the riding object information. Accordingly, it is possible to appropriately acquire the information on the object, which is other than the rider 200 and rides on the straddle-type vehicle 100. Therefore, it is possible to appropriately assist with the rider 200.

Preferably, the acquisition section 21 acquires the riding object information on the basis of the information on the detectability of the environment sensor (for example, the environment sensor 11b, the environment sensor 11c, the environment sensor 11d, or the like). In addition, preferably, the acquisition section 21 acquires the riding object information on the basis of the information on the distance and/or the direction from the environment sensor (for example, the environment sensor 11b, the environment sensor 11c, the environment sensor 11d, or the like) to the riding object. Furthermore, preferably, the acquisition section 21 acquires the riding object information on the basis of the information on the position of the ground detected by the environment sensor (for example, the environment sensor 11b, the environment sensor 11c, the environment sensor 11d, or the like). With those configurations, it is possible to appropriately acquire the information on the object, which is other than the rider 200 and rides on the straddle-type vehicle 100.

Preferably, the acquisition section 21 acquires the positional relationship information between the straddle-type vehicle 100 and the surrounding object on the basis of the output of the environment information detection system 11, and then the execution section 22 executes the assistance operation on the basis of the positional relationship information in addition to the riding object information. With such a configuration, it is possible to appropriately assist with the rider 200.

### Reference Signs List

1: Assistance system
11: Environment information detection system
11a, 11b, 11c, 11d: Environment sensor
12: Travel state information detection system
12a: Wheel rotational frequency sensor
12b: Inertial sensor
20: Controller
21: Acquisition section
22: Execution section
30: Brake system
40: Drive system
50: Notification device
100: Straddle-type vehicle
100A: Rear fender
100B: Passenger step
110: Worn article
200: Rider

## Claims

1. A controller (20) for a straddle-type vehicle (100), the controller (20) comprising:
an acquisition section (21) that acquires riding object information as information on a riding object as an object, which is other than a rider (200) of the straddle-type vehicle (100) and rides on the straddle-type vehicle (100), on the basis of output of an environment information detection system (11) that includes at least one environment sensor (11a, 11b, 11c, 11d) mounted to the straddle-type vehicle (100) and detects information on a surrounding object as an object located around the straddle-type vehicle (100); and
an execution section (22) that executes assistance operation for the rider (200) on the basis of the riding object information.

2. The controller (20) according to claim 1, wherein
the riding object information includes information on presence or absence of the riding object.

3. The controller (20) according to claim 1 or 2, wherein
the riding object information includes information on a position of the riding object.

4. The controller (20) according to any one of claims 1 to 3, wherein
the riding object information includes information on a type of the riding object.

5. The controller (20) according to any one of claims 1 to 4, wherein
the riding object information includes information on a size of the riding object.

6. The controller (20) according to any one of claims 1 to 5, wherein
the riding object information includes information on weight of the riding object.

7. The controller (20) according to any one of claims 1 to 6, wherein
the acquisition section (21) acquires the riding object information on the basis of information on detectability of the environment sensor (11a, 11b, 11c, 11d).

8. The controller (20) according to any one of claims 1 to 7, wherein
the acquisition section (21) acquires the riding object information on the basis of information on a distance and/or a direction from the environment sensor (11a, 11b, 11c, 11d) to the riding object.

9. The controller (20) according to any one of claims 1 to 8, wherein
the acquisition section (21) acquires the riding object information on the basis of information on a position of ground detected by the environment sensor (11a, 11b, 11c, 11d) .

10. The controller (20) according to any one of claims 1 to 9, wherein
the assistance operation includes notification operation to the rider (200).

11. The controller (20) according to any one of claims 1 to 10, wherein
the assistance operation includes behavior control operation of the straddle-type vehicle (100).

12. The controller (20) according to any one of claims 1 to 11, wherein
the acquisition section (21) acquires positional relationship information between the straddle-type vehicle (100) and the surrounding object on the basis of the output of the environment information detection system (11), and
the execution section (22) executes the assistance operation on the basis of the positional relationship information in addition to the riding object information.

13. The controller (20) according to claim 12, wherein
the acquisition section (21) acquires the positional relationship information with the surrounding object located in an area that is set according to the riding object information of an area around the straddle-type vehicle (100).

14. A control method for a straddle-type vehicle (100), the control method comprising:
acquiring riding object information as information on a riding object as an object, which is other than a rider (200) of the straddle-type vehicle (100) and rides on the straddle-type vehicle (100), by an acquisition section (21) of a controller (20) for the straddle-type vehicle (100) on the basis of output of an environment information detection system (11) that includes at least one environment sensor (11a, 11b, 11c, 11d) mounted to the straddle-type vehicle (100) and detects information on a surrounding object as an object located around the straddle-type vehicle (100); and
executing assistance operation for the rider (200) by an execution section (22) of the controller (20) on the basis of the riding object information.
